# EUROPEAN PATENT SPECIFICATION

(11) **EP 1 958 001 B1**
(45) Date of publication and mention of the grant of the patent: **05.10.2011**
(21) Application number: 05769084.4
(22) Date of filing: 28.07.2005
(51) Int. Cl.: G01S 7/38, F42B 12/36, H01Q 1/10

(54) **TRANSMITTER OF ACTIVE BARRAGE RADIO JAMMING TRANSMISSION AND METHOD FOR MANUFACTURING THE SAME**
SENDER FÜR AKTIVBOMBARDIERUNGS-FUNKSTÖRSENDUNG UND HERSTELLUNGSVERFAHREN DAFÜR
TRANSMETTEUR D'UNE ÉMISSION ACTIVE DE BROUILLAGE RADIO À LARGE BANDE ET SON PROCÉDÉ DE FABRICATION

(43) Date of publication of application: 20.08.2008
(73) Proprietor: Samel 90 AD, 2000 Samokov (BG)
(72) Inventor: GEORGIEV, Petar, 2000 Samokov (BG); PETKOVA, Aneta, 2000 Samokov (BG); YONCHEV, Georgi, 2000 Samokov (BG)
(74) Representative: Lekova, Tatyana Boyanova
(86) International application number: PCT/BG2005/000009
(87) International publication number: WO 2007/012148

(56) References cited:
- FR-A- 2 732 470
- US-A- 5 192 827
- US-B1- 6 424 286
- DATABASE WPI Section PQ, Week 200029 Derwent Publications Ltd., London, GB; Class Q79, AN 2000-337532 XP002375209 & RU 2 131 107 C1 (SPLAV RES PRODN ENTERP) 27 May 1999 (1999-05-27) & RU 2 131 107 C1 (GOSUDARSTVENNOE NAUCHNO-PROIZVODSTVENNOE PREDPRIJA) 27 May 1999 (1999-05-27)

## Description

### Field of Invention

The invention refers to transmitters of radio jamming transmissions assigned for developing of active barrage radio jamming transmissions in a wide frequency range (up to 2,7 GHz). The invention is used for the production of transmitters for single action radio jamming transmissions delivered to the target using artillery carrier, missile carrier or launching from a flying object.

### Prior Art

A transmitter of active barrage radio jamming transmissions has been well-known and has been built by:
- A metal housing with a stabilizing system, consisting of cone with a tip, tube, radiator and stabilizing system.
- Electronics and power supply unit consisting of power supply source, inertial switch, first and second time relay, stabilizer, exciter, buffer stage, driver, output stage, antenna matching device, antenna and pyro-charge.
- The battery, electronic unit, pyro-charge, telescopic antenna have been put in the metal housing. The cone with the tip has been supported to the tube of the cone by tapped connection and has provided driving the body into the ground.

A telescopic antenna, which is set in position by a pyro-charge, has been mounted in the central tube, which passes through the central hole in the radiator and all PCBs and reaches the section of the battery.

All modules, which provide the implementation of the electric circuit, have been mounted in the electronic unit. It comprises a radiator, on which an inertial switch and powerful transistors; two PCBs (driver and output stage) and related components forming a module "Power (Output) Amplifier" ("PA"), have been supported. The "Exciter" Module has been implemented by two PCBs ("Modulator" and "Master Oscillator") on which five electronic sub-modules have been mounted and located in metal screens so as not to be influenced by the electromagnetic radiation. The frequency tuning of the master oscillator has been implemented with a ferrite core, which has been fixed in the corresponding set position after a number of climatic tests by means of epoxy compound. The high frequency signal generated by the "Exciter" Module comes into the input of the module "PA", while on the output there is an antenna-matching device (ACS - Automatic Control System Module), which has been implemented by tunable coils by means of metal cores and groups of capacitors, which have previously been selected by their values. After tuning the ACS module, which has also been screened, is also poured with polymeric compound and tested for its impedance so as to set up whether there is a change of the parameters after it had been poured.

The whole packet of five PCBs, mounted on the central tube, has been tightened by means of a nut from the one side and an antenna isolator from the other side. The electronic unit, formed in this way, has been mounted in the metal housing, tuned and tested at a temperature of 40°C and plus 50°C. After the temperature tests have been made, the relevant readjustments have been made in compliance with the shift of the frequency limits. It is poured with polymeric compound so as to increase its mechanical strength.

The battery has been formed like a cylinder mounted under the electronic unit and tightened in the metal housing with the cone. It has the capacity of 2,0 A/h and provides not less than an-hour-time for the operation of the transmitter.

A transmitter of active barrage radio jamming is known from US-A-5 192 827 which includes a case with cone-shaped upper part and cylindrical body, in which a battery and an electronic unit are placed one adjacent the other.

The disadvantages of the well-known transmitter are that the electronic modules have got more restricted technical possibilities like frequency range, transmission power, continuous operation time and reliability. In addition, due to the usage of conventional large and heavy components, conditions for return are possible in the process of operation, mechanical breakdown or their leads break-off due to acceleration and strikes to which they are subjected during the transmitter launching and landing.

### Technical subject-matter of the invention

The purpose of the invention is the development of an active barrage radio jamming transmitter with increased range of operation and capacity of on board power supply, as it provides the oscillation of jamming radio signals in a wide frequency range and a suitable power, which provides reliable suppression of the useful signal at the input of the receiver of the jammed radio station for a long period.

The purpose has been achieved as an active barrage-jamming transmitter including housing with stabilizing system, conic-shaped upper part and cylindrical corpus. An accelerator, battery, electronic unit have been mounted in the cylindrical corpus, including noise generator, voltage controllable generator, power amplifier and antenna matching device. It is typical of the transmitter that the electronic unit has been formed as a single entire module and it includes series connected modulator phase detector and correction amplifier whose output has been connected to the input of the voltage controlled generator at which the second power amplifier outputs and at the antenna matching device have been connected to the relevant inputs of the phase detector whilst the third output of the modulator has been connected to the second input of the antenna matching device. In addition, a cylindrical gap has been formed along the whole corpus, in which gap; a telescopic antenna has been mounted.

In one version of the performance of the transmitter, the antenna has been built of 12 segments entering telescopically in one another.

The battery has been built with lithium components located in a cylindrical construction and strengthened and fixed with polymeric resin. In the middle, there is a cylindrical gap for passing and mounting the antenna.

The electronic unit of the transmitter has been built as a combination of elements for SMD assembly and components for conventional mounting.

The advantages of the invention are the development of mechanical construction calculated, measured and configured so as to provide strength and robustness in the event of high overloads and accelerations on the one hand and to prevent the electronic components from destruction and breakdown on the other hand. For the fulfillment of this construction, temper hardened and thermal processed materials have been used with ensuing varied mechanical processing in different modes, polymeric materials and resins preventing and protecting the electronic components and used for electric isolators from metal parts. This construction allows the final product mounted in the artillery or missile carrier to stand mechanical acceleration and overloads up to 16000 G, after which a number of sophisticated mechanical and electronic assemblies shall be activated and function reliably. They provide the jamming transmitter landing in a certain point at a previously specified distance of shooting, including electric power source, stretching the jamming transmitter's antenna, reliable operation of the jamming transmitter for not less than 2 hours at any atmosphere and weather conditions and falling into water, muddy and frozen soil and other similar ones and in the temperature range from - 40°C to + 50°C. During this time the jammed radio receiver cannot fulfill its aim for the transmitter generates intensive active barrage jamming and typical of pseudorandom feature as a result of using specialized software which provides the random nature of the jamming signal and thus increases the likelihood of the suppression of the jammed receiver. In case of additional necessity and in connection with the specific necessities of the user of the final product, the continuous operation period of the jamming transmitter can be increased and limited up to a specified value by means of electronic timer mounted in the transmitter.

### Description of the Drawings

Figure 1 is a cross section of an active barrage-jamming transmitter according to the invention;
Figure 2a is a view from the top of the battery from the composition of the transmitter in Figure 1;
Figure 2b is a longitudinal section of the battery;
Figure 3 is a block diagram of the electronic unit together with the antenna-matching device.

### Examples embodiment of the invention

A device for getting some active barrage jamming in a wide frequency range delivered to the target with an artillery shell.

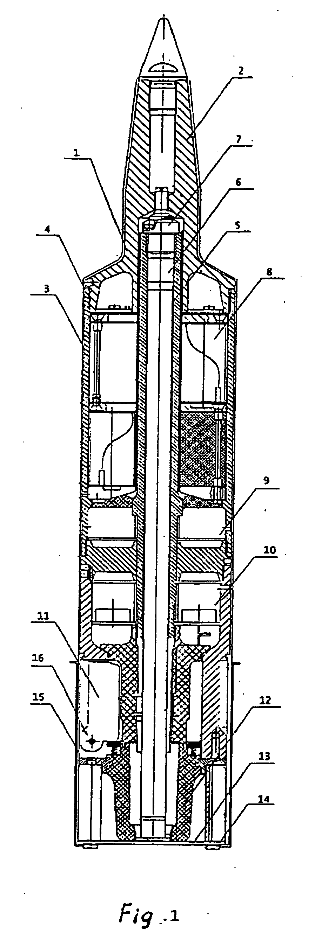

The active barrage-jamming transmitter (Fig. 1) includes a housing 1 with a conic shape to part 2 and cylindrical corpus 3, held to the conic shaped part 2 by means of screw couplings 4. On the longitudinal axis of the corpus 1, a cylindrical cavity 5 has been formed and a telescopic antenna 6 has been mounted in. between the bottom of the conic shaped part 2 and the lower part of the telescopic antenna 6 an accelerator 7 is located. In the cylindrical corpus 3, the following components are located one under another: battery 8, the electronic unit 9, the antenna-matching device 10, stabilizer 11 and cap 12. The cylindrical corpus 3 is closed by means of a cap 13, held to the corpus 3 by means of the bolt connections 14. The stabilizer 11 is under sprung to flange 15 of the cap 12 by means of springs 16. A limiter has been mounted in the cap and it has been measured in such a way that when the accelerator is activated the hole in the cap 12 is released so as the antenna 6 could get out.

The antenna has been built by maximum 12 components, which are located one in another in the antennas folded position. The increased length of the antenna 6 towards that of the previously well-known device, which consists of 6 components, is in connection with the increased frequency range in the direction of HF, at which a longer antenna is required for optimal matching.

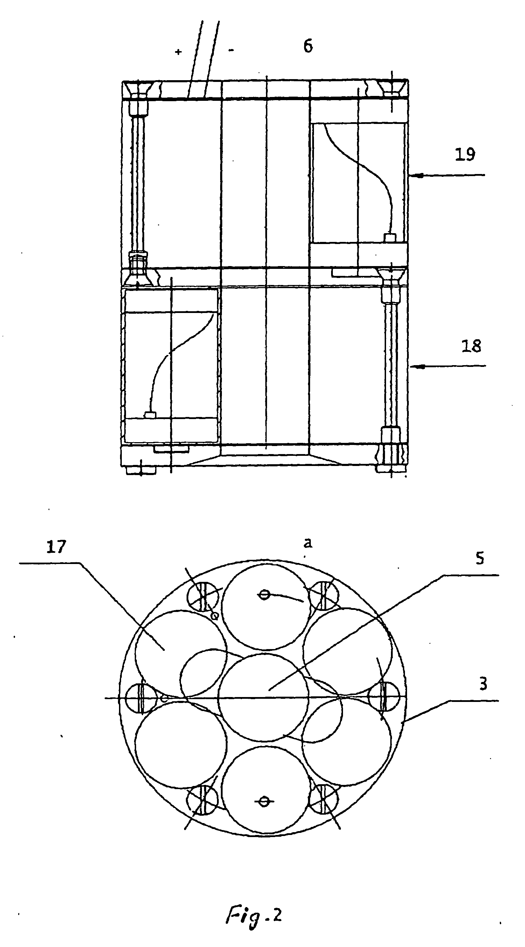

The battery 8 (Fig. 2a and 2b) has been built by lithium components 17, located concentrically between the cylindrical corpus 3 and the cavity 5. It includes 12. components (two rows, 6 components each) and provides DC power supply with a voltage of 28 to 36 V. Thus the transmitter according to the present invention has got a longer time for continuous operation and provides a higher level of the generated jamming. The battery is located so as to occupy the released room and weight from the decreased volume of the electronic unit and does not disturb the ballistics of the transmitter during its real usage.

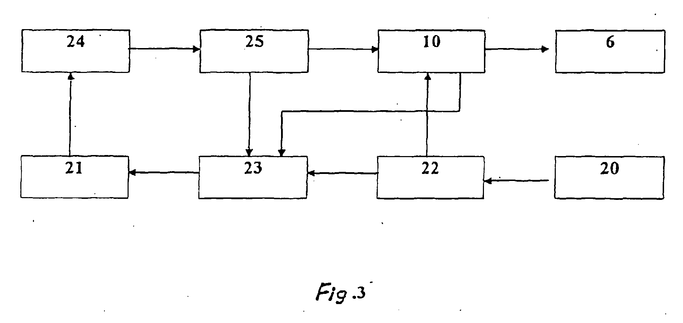

The electronic unit (Fig. 3) includes noise generator 20, whose output is connected to the series coupled modulator 22 and phase detector 23. The output of the latter is connected to a correction amplifier 21. The output of the correction amplifier 21 is connected to the input of the voltage-controlled generator 24. The output of the voltage-controlled generator 24 is connected by means of the power amplifier 25 to the first input of the antenna-matching device 10. The second outputs of the power amplifier 25 and the antenna matching device 10 is connected to the relevant inputs of the phase detector 23 while the second output of the modulator 22 is connected to the second input of the antenna matching device 10 whose first output is connected to the antenna 6. The connection between modulator 22, amplifier 25, antenna matching device 10 and antenna 6 has been made by high frequency signals.

Due to the feedback made in the electronic unit 9 makes it possible to trace the operation of the antenna-matching device 10 at any moment for a given frequency. This implementation provides good matching of very low frequencies, which allows extension of the frequency range, and dynamically matching at any moment from they time for a given frequency from the range. This allows more entire leasing of the generated electromagnetic energy and hence a higher level of the transmitted jamming with preserving the weight and dimensions of the transmitter, i.e. better power/weight ratio.

The voltage-controlled generator 24 has been implemented in integrated form due to which repetition and reliability of the parameters of this generator and relevant higher temperature independence of the characteristics controlling voltage/generated frequency.

In the jamming generator 20 a digital synthesis of pseudorandom sequence has been implemented and used for scanning modulation. In this way, an algorithm, which is difficult for detection, has been implemented for change of frequency from the adaptive radio stations to be jammed.

The final stage of the power amplifier 25 operates in class "F" which guarantees greater efficiency of the transmitter and a longer period of the continuous operation of the battery.

On account of using MOS transistors in the electronic unit 9 a more regular amplitude-frequency characteristics in the whole frequency range has been achieved.

### Method of usage

The implementation of the product preparation method undergone greater accelerations starts with the selection of the composite building electronic components and materials which are selected, from the time of their design, in accordance with the methods of assessment of their technical parameters in the extreme conditions of operation. The same are subject to a number of tests in definite limits before they had been approved. Those tests are performed at different temperature modes and on vibration and shock stands of different action. The assembly and support of the separate electronic components, parts, assemblies and electronic modules is precise in a strict definite technological order accompanied with relevant control at boundary climatic and mechanical operation conditions. When keeping to the technological process the results of the tests are positive and the internal volume of the products (jamming transmitters) is poured (filled) with polymeric multi-component compound, which additionally improves the mechanical parameters of the product supports the electronic components and groups. The technology of pouring allows the different components of the compound mixed with previously calculated proportions and quantities in a standard environmental temperature and under high pressure in liquid form to be poured in the interior of the jamming transmitters. For the implementation of these operations, different technologies of dosing, instruments for keeping at a certain temperature and supporting instruments and accessories. The compound tightening to the required density is acquired through putting the transmitter in a heating camera at a normal temperature and downtime.

After testing the active barrage-jamming transmitter, it is to be mounted in the interior of a special remodeled corpus of a different sized artillery shell and systems. The corpus of the shell is closed with bottom and nut. The stabilizing system 11 of the transmitter, when it is assembled in the corpus of the shell, is retired (folded). On the top of the shell, in its forehead, a detonating mechanism (remote fuse) is mounted. By means of the latter, the possibility that the transmitter can be separated from the corpus of the shell is provided in a definite point of the motion trajectory of the shell.

The shells, with the jamming transmitters mounted in, together with metal cartridge, are placed in a special package. For the practical usage of the jamming transmitters the following actions are to be performed:
By means of special software, which treats the output conditions according to a given likelihood for jamming the receivers, the zones used for shooting and the quantity of the transmitters to be delivered have been defined.
By means of the data from item 1 and through a shell shooting table the data for shooting has been defined and are conveyed on artillery accounts.

The shell with the transmitter mounted in it is taken out from the package. A fuse is mounted on the top of the shell, as it provides the separation of the transmitter from the case of the shell at a defined point of the trajectory of the movement of the shell.

The switch of the detonator (fuse) determines the period of time after which it would be activated and would eject the transmitter out of the shell case, by eliminating (mechanically breaking) the bottom and the nut. This is achieved by means of the pressure created by the detonator and the burning of the powder mixture.

The artillery system is prepared for firing using the data from p. 2 and the shell (with jammer transmitter mounted in it) and the explosive charge cartridge are loaded in it.

A gunshot is made. The detonator (fuse) is activated during the flight of the shell and the separation of the transmitter from the shell case is carried out.

After the separation from the shell the transmitter starts falling, as its stabilizing system 11 is activated by means of overcoming the elastic resistance of the spring 16.

The transmitter digs into the ground in the predefined area, then due to the impact a switch (not shown on Figure 1) is activated (by this time this switch was cutting off the power supply from the battery 8). After the activation of the switch, the electric circuit between the battery 8 and the electronic unit 9 is closed, as in this way the electronic unit is powered. After the expiry of a period of time that is preset during the manufacture, a power is supplied to the accelerator 7, which is composed of electric fuse and powder charge. The accelerator is activated and due to the pressure created in it (caused by the burning of the powder mixture) the components of the telescopic antenna 6 are stretched out. The pressure created by the accelerator shall be sufficient and not bigger than the necessary, for the whole temperature range from -40°C to +50°C, so that the components of the telescopic antenna are completely stretched out on one hand, and not cut on the other. Simultaneously with the stretching out of the antenna, the power supply voltage from the electronic unit 9 is supplied to its components.

A generation of pseudorandom sequence of noise signal (that is additionally modulated) is carried out after the supply of the power supply voltage to the modulator 22. The amplifier 25 amplifies the received high frequency signal and the latter is received at the Antenna Tuning Unit (ATU) 10 input, as at the output the signal is tuned with the transmitter telescopic antenna.

The generated barrage jamming creates noise electromagnetic fields at the input of the radio receivers, as in this way they could not receive radiograms from the corresponding transmitters.

After the expiry of the transmitter operation time determined by the user, the built-in timer (if there is any) switches off the power supply and in this way stops its operation.

## Claims

1. A transmitter for active barrage radio jamming, including a case (1) which comprises a cone-shaped upper part (2) and cylindrical body portion (3) mechanically connected thereto, in which case (1) the following items are mounted one adjacent the other: battery (8), electronic unit (9), **characterized by** said electronic unit (9) further comprising noise generator, voltage controlled generator, power amplifier and antenna matching unit, said case (1) being further **characterized by** following further items being mounted one adjacent the other: accelerator (7), stabilizer (11) and cap (12), and further **characterized by** the electronic unit (9) being shaped as a unitary module, including connected in series a modulator (22), a phase detector (23) and a correction amplifier (21), said correction amplifier having its output connected to the input of voltage controlled generator (24), said voltage controlled generator (24) having its output connected to a power amplifier (25) and secondary outputs of the power amplifier (25) and of an antenna matching unit (10) are connected to the respective inputs of the phase detector (23) and a secondary output from modulator (22) is connected to a secondary input of the antenna matching unit (10), and the transmitter case (1) comprising along the complete length thereof a cylindrical cavity (5) in which a telescopic antenna (6) is mounted.

2. Transmitter according to claim 1, **characterized by** the fact that the antenna (6) is built of maximally 12 segments, extending coaxially one into each other, when the antenna is in a folded position.

3. Transmitter according to claim 1 or 2, **characterized by** the fact that the battery (8) is built of ion-lithium cells (17) connected in series that are mounted in two rows in a space between the cylindrical case portion (3) of the transmitter and cylindrical cavity (5), in which the antenna is placed (6).

4. Transmitter according to claim 1, 2 or 3, **characterized by** the fact that the electronic unit (9) comprises SMD assembly components.

## Patentansprüche

1. Ein Sender der aktiven sperrenden Radiostörsendungen, mitsamt einem Gehäuse (1), das aus einem kegelförmigen Oberteil (2) und zylindrischen Körper (Abschnitt (3) mechanisch mit ihm verbundenen) besteht; in dem Gehäuse (1) sind die folgenden Elemente untereinander gelegt: die Batterie (8), die Elektronenbaueinheit (9), **dadurch gekennzeichnet, dass** die Elektronenbaueinheit (9) zusätzlich aus einem Rauschgenerator, spannungsgesteuerten Generator, Leistungsverstärker und einer Antennenanpassungsvorrichtung besteht und das erwähnte Gehäuse (1) wird weiter durch folgende weitere Punkte, die untereinander montiert sind, gekennzeichnet: der Beschleuniger (7), der Stabilisator (11) und die Kappe (12); weiter charakterisiert der Elektronenblock (9) wird weiter dadurch charakterisiert, dass er als ein einheitliches Modul geformt ist, er schließt einen in Serie geschalteten Modulator (22), einen Phasendetektor (23) und einen Korrekturverstärker (21), dessen Ausgang mit dem Eingang des spannungsgesteuerten Generator (24) verbunden ist, ein, wobei der spannungsgesteuerte Generator (24) mit seinem Ausgang an einem Leistungsverstärker und die sekundäre Ausgänge des Leistungsverstärkers (25) und des Antennenanpassungsgeräts (10) zu den jeweiligen Eingängen des Phasendetektors (23) angeschlossenen sind, und der sekundäre Ausgang des Modulators (22) ist zu einem sekundären Eingang der Antennenanpassungsvorrichtung (10) verbunden, und das Gehäuse des Senders (1) die gesamte Länge umfassend, ist ein zylindrischer Hohlraum (5), in dem die Teleskopantenne (6) gelegt ist.

2. Der Sender nach Anspruch 1, **gekennzeichnet dadurch, dass** die Teleskopantenne (6) aus maximal 12 Segmenten aufgebaut wird, die teleskopisch ineinander hineingehen, wenn die Antenne in der gefalteten Position ist.

3. Der Sender nach Anspruch 1 oder 2, gekenntzeichnet dadurch, dass die Batterie (8) von Lithium-Komponenten (17) in Reiheschaltung aufgebaut ist, die in zwei Reihen in einem Raum zwischen dem zylindrischen Körper (3) des Senders und zylindrischem Hohlraum (5), in dem die Antenne (6) platziert wird, angeordnet ist.

4. Der Sender nach Anspruch 1, 2 oder 3, **gekennzeichnet dadurch, dass** die Elektronenbaueinheit (9) aus SMD Baugruppen gebildet wird.

## Revendications

1. Un émetteur de brouillage en barrage actif comprenant une enveloppe (1) qui est composée d'une partie conique supérieure (2) et d'un corps cylindrique (partie (3) qui lui est mécaniquement reliée), dans laquelle enveloppe (1) sont insérés l'un sous l'autre les éléments suivants: la batterie (8), l'unité électronique (9), **caractérisé par** l'unité électronique (9) ci-dessus mentionnée composée en plus d'un générateur de bruit, un générateur commandé en tension, d'un amplificateur de puissance et d'un dispositif d'accord d'antenne et l'enveloppe (1) mentionnée ci-dessus est caractérisée aussi par les éléments supplémentaires suivantes qui sont disposés l'un sous l'autre: un accélérateur (7), un stabilisateur (11) et un capuchon (12), et caractérisée en plus par l'unité électronique (9) qui est formée en tant qu'un module entier comprenant un modulateur (22), un détecteur de phase (23) et un amplificateur de correction (21) connectés en série, la sortie de l'amplificateur étant reliée à l'entrée du générateur commandé en tension (24), le ci-nommé générateur commandé en tension (24) dont la sortie est reliée à l'amplificateur de puissance et les secondes sorties de l'amplificateur de puissance (25) et du dispositif d'accord d'antenne (10) sont reliées aux entrées correspondantes du détecteur de phase (23) et la seconde sortie du modulateur (22) est reliée à la seconde entrée du dispositif d'accord d'antenne (10) et l'enveloppe de l'émetteur (1) englobant toute sa longueur est une cavité cylindrique (5) dans laquelle est insérée une antenne télescopique (6).

2. L'émetteur conformément à la revendication 1 **caractérisé par le fait que** l'antenne télescopique (6) est construite maximum de 12 segments entrant de manière télescopique l'un dans l'autre quand l'antenne est dans un état replié.

3. L'émetteur conformément à la revendication 1 ou 2 **caractérisé par le fait que** la batterie (8) est construite d'éléments en lithium (17) reliés en série qui sont disposés en deux rangs dans l'espace entre le corps cylindrique (3) de l'émetteur et la partie du corps cylindrique (3) de l'émetteur et la cavité cylindrique (5) dans laquelle l'antenne est disposée (6).

4. L'émetteur conformément à la revendication 1, 2 ou 3 **caractérisé par le fait que** l'unité électronique (9) est constituée de composants assemblés par le montage
